# EUROPEAN PATENT APPLICATION

(11) **EP 3 306 894 A1**
(43) Date of publication of application: **11.04.2018**
(21) Application number: 16192445.1
(22) Date of filing: 05.10.2016
(51) Int. Cl.: H04L 29/08, G06T 19/00

(54) **GENERATION OF AUGMENTED REALITY**

(71) Applicant: Kone Corporation, 00330 Helsinki (FI)
(72) Inventor: HILTUNEN, Jussi, 00330 HELSINKI (FI); MIETTINEN, Otto, 00330 HELSINKI (FI); BERGMAN, Kim, 00330 HELSINKI (FI); SHUJING, Li, Budong District, Shanghai (CN); LEMPINEN, Eeva, 00330 HELSINKI (FI)
(74) Representative: Berggren Oy, Helsinki & Oulu

(57) **Abstract**

The invention relates to a solution for generating augmented reality of a space to be output on a display of a computing device (120). The method comprises: receiving a request (210) space from the computing device (120); determining (220) information on a configuration of the space (110); generating (230) a signal to at least one display (310) residing in the space for outputting at least one marker (320); and generating (240) a signal comprising at least one instruction to the computing device (120) for providing augmented reality data for the space and for outputting the augmented reality data with image data captured with a camera on a basis of the at least one marker (320) in order to generate augmented reality of the space. The invention relates also to a network node and a computing device and a method executed by the computing device.

## Description

### TECHNICAL FIELD

The invention relates generally to a technical field of augmented reality. More particularly, the invention relates to generation of augmented reality for a space.

### BACKGROUND

Augmented reality is a live real-world environment whose elements are augmented by computer-generated effects, such as sound, video, graphics, haptic feedback and/or even smell. In other words, the augmented reality blurs the line between what is real and what is computer-generated by enhancing what we see, hear, feel and smell.

In a context of buildings the augmented reality provides a tool to design or redesign spaces within the buildings. This refers especially to a situation in which an interior of a space in a building is desired to be renewed. In such a situation it would be advantageous to see different alternatives for the interior prior to making an order of the renewal of the space. This would improve the customer satisfaction and also possibly making the use of the space more pleasant as the design is top quality.

Some prior art suggests that a user may receive an impression on a redesigned space, such as a room or even an elevator car, with his or her computing device so that a camera residing in the computing device or being external to that is used for capturing video image data on the space and on top of that a new interior may be overlaid. The user may see the redesigned space on a screen of the computing device. The new interior data is positioned on top of the video image data on a basis of pattern recognition from the video image data i.e. the dimensions of a space may be recognized in order to overlay the interior data in a correct way on the captured video images of the space.

The drawback of the prior art solution as described above is that the pattern recognition requires remarkable computing resources from the user's computing device, or any entity used for pattern recognition. This is especially true when the user moves his/her computing device and the augmented reality for the space shall be calculated in real-time. Moreover, such a pattern recognition based solution does not take into account any information relating to the space in question, which may be needed to generate a sophisticated augmented reality of the space.

Thus, there is need to develop solution which at least in part mitigate the drawbacks of the prior art solutions.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present methods and devices for generating augmented reality. Another objective of the invention is that the methods and devices for generating the augmented reality provide a solution to be used in environments wherein a configuration of a space is known at least to some extent.

The objectives of the invention are reached by methods and devices as defined by the respective independent claims.

According to a first aspect, a method for generating augmented reality of a space to be output on a display of a computing device is provided, wherein the method comprises: receiving a request for a generation of the augmented reality of the space from the computing device; determining information on a configuration of the space on which the generation of the augmented reality is requested; generating a signal to at least one display residing in the space for outputting at least one marker on the at least one display according to the information on the configuration of the space; and generating a signal comprising at least one instruction to the computing device for providing augmented reality data for the space according to the configuration of the space and for outputting the augmented reality data with image data captured with a camera of the computing device at least in part on a basis of the at least one marker output on the at least one display residing in the space in order to generate augmented reality of the space.

The determination of configuration information of the space may comprise a step of inquiring information on the at least one display from data storage. The information on the at least one display may comprise information on at least one of the following: a network address of the at least one display, a network address of a controller of the at least one display, a position of the at least one display in the space, a position of the at least one marker to be output on the at least one display.

The signal comprising at least one instruction to the computing device for providing augmented reality data for the space according to the configuration of the space and for outputting the selected augmented reality data with image data captured with a camera of the computing device at least in part on a basis of the at least one marker output on the at least one display residing in the space may comprise configuration information of the space. For example, the configuration information of the space in the signal may comprise at least one of the following: dimensions of the space, information on a position of the at least one marker in the space when displayed.

According to a second aspect, a network node for generating augmented reality of a space to be output on a display of a computing device is provided, wherein the network node comprises at least one processor and at least one memory including computer program code, wherein the at least one memory and the computer program code configured to, with the at least one processor, cause the network node at least to perform: receive a request for a generation of the augmented reality of the space from the computing device; determine information on a configuration of the space on which the generation of the augmented reality is requested; generate a signal to at least one display residing in the space for outputting at least one marker on the at least one display according to the information on the configuration of the space; generate a signal comprising at least one instruction to the computing device for providing augmented reality data for the space according to the configuration of the space and for outputting the augmented reality data with image data captured with a camera of the computing device at least in part on a basis of the at least one marker output on the at least one display residing in the space in order to generate augmented reality of the space.

The network node may further be caused to inquire configuration information on the at least one display relating to the space from data storage. The inquired configuration information on the at least one display may comprise information on at least one of the following: at least a network address of the at least one display, a network address of a controller of the at least one display, a position of the at least one display in the space, a position of the at least one marker to be output on the at least one display.

The network node may also be caused to provide configuration information of the space in the signal comprising at least one instruction to the computing device for providing augmented reality data for the space according to the configuration of the space and for outputting the selected augmented reality data with image data captured with a camera of the computing device at least in part on a basis of the at least one marker output on the at least one display residing in the space. For example, the configuration information of the space in the signal may comprise at least one of the following: dimensions of the space, information on a position of the at least one marker in the space when displayed.

According to a third aspect, a method for generating augmented reality of a space to be output on a dis-play of a computing device is provided, wherein the method comprises: transmitting a request for a generation of the augmented reality of the space to a network node; capturing an image of at least part of the space with a camera coupled to the computing device; receiving a signal comprising at least one instruction for providing augmented reality data for the space according to a configuration of the space; and outputting the augmented reality data with image data captured with the camera at least on a basis of at least one marker output on at least in part one display residing in the space recognized from the captured image by the computing device in order to generate augmented reality of the space.

The output of the augmented reality data with the image data captured with the camera at least on a basis of at least one marker may be performed by overlaying the augmented reality data on top of the captured image data.

The augmented reality data may be aligned with the image data on the basis of the at least one marker recognized from the image data.

According to a fourth aspect, a computing device for generating augmented reality on a display of the computing device, wherein the computing device comprises at least one processor and at least one memory including computer program code, wherein the at least one memory and the computer program code configured to, with the at least one processor, cause the computing device at least to perform: transmit a request for a generation of augmented reality of a space to a network node; capture an image of at least part of the space with a camera coupled to the computing device; receive a signal comprising at least one instruction for providing augmented reality data for the space according to a configuration of the space; and output the augmented reality data with image data captured with the camera at least in part on a basis of at least one marker output on at least one display residing in the space recognized from the captured image by the computing device in order to generate augmented reality of the space.

The computing device may be configured to output the augmented reality data with the image data captured with the camera at least on a basis of at least one marker by overlaying the augmented reality data on top of the captured image data.

The computing device may be configured to align the augmented reality data with the image data on the basis of the at least one marker recognized from the image data.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an environment in which the present invention may be implemented to.
Figure 2 illustrates schematically a method performed in a network node according to an embodiment of the present invention.
Figure 3 illustrates schematically a space at one state according to an embodiment of the present invention.
Figure 4 illustrates schematically at least some details of a method step according to an embodiment of the present invention.
Figure 5 illustrates schematically an example of a network node according to an embodiment of the invention.
Figure 6 illustrates schematically an example of a computing device according to an embodiment of the invention.
Figure 7 illustrates schematically a method performed in a computing device according to an embodiment of the present invention.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

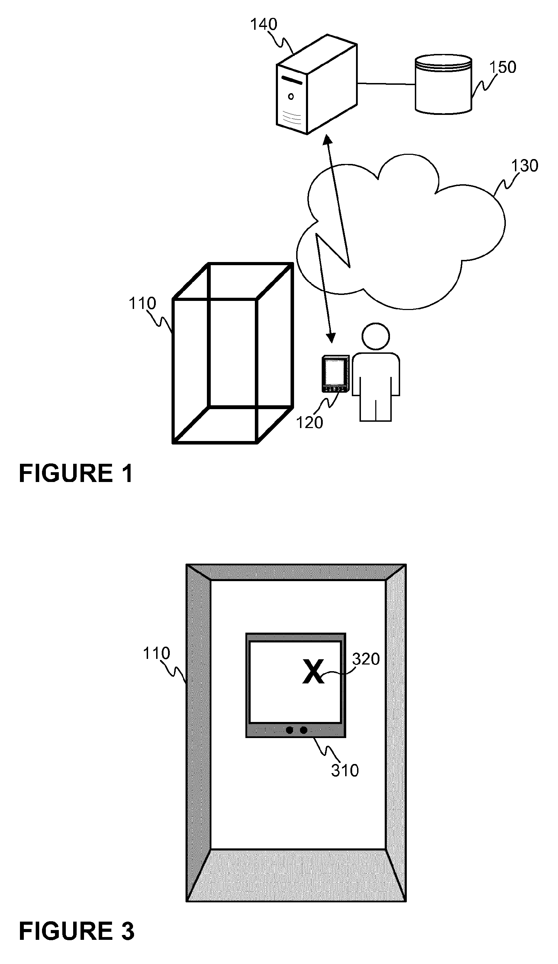

Figure 1 schematically illustrates an example of an environment in which the present invention may be implemented to. One aim of the present invention is to provide user augmented reality data relating to a space 110. The space may e.g. be an elevator car. The user may carry a computing device 120 that comprises at least a camera and a communication interface together with processing means. The computing device 120 may be communicatively coupled to a network node 140 over a communication network 130. The network node 140 may be communicatively coupled to data storage 150, such as a memory device in which a data base is implemented, for inputting and outputting data to and from the data storage. The environment of the invention shown in Figure 1 is schematic and any other implementation may be used to achieve functionalities as will be described later. For example, the computing device 120 is not necessarily a single entity, but may consist of separate entities communicatively and operatively coupled together. The communication between the computing device 120 and the network node 140 may e.g. be implemented in wired or wireless manner or in any combination of these two. The functionality of the network node 140 may be arranged to be distributed between a plurality of network nodes and/or devices. In the distributed implementation necessary control operations are established according to need.

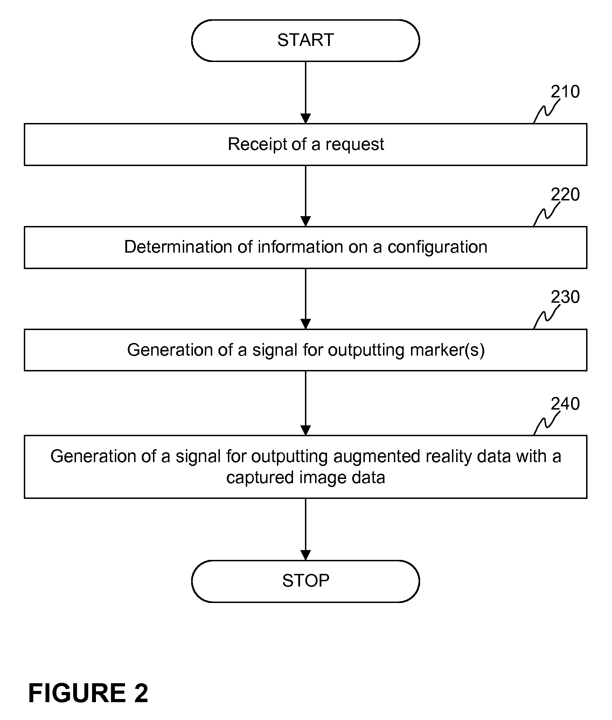

Next an example of the method according to the present invention is described by referring to Figure 2. The method as shown in Figure 2 is illustrated from the network node 140 point of view. The method may be initiated in response of a receipt of a request from a computing device 120. The request advantageously comprises an indication that the computing device 120 requests a generation of augmented reality data for a space 110, such as an elevator car, in question. Thus, the indication may indicate directly or indirectly that the request relates to the generation of the augmented reality. The request may also carry any further information, such as any kind of identifier of the space 110 in question or information on the location of the space 110. For example, if the space 110 is an elevator car the identifier may e.g. be an elevator car identifier expressed e.g. with a character string of a predetermined type. Alternatively or in addition, the identifier may be obtained with any sensor device of the computing device 120, such as with a camera. In such an implementation the identifier may e.g. be a bar code or a QR code implemented in a vicinity of the space 110 or in the space with e.g. a label, which information may be obtained with the computing device 120 by the user. These are some non-limiting examples of the identifier as such. The computing device 120 may transmit the request in a predetermined manner. The transmit of the request may e.g. be based on a predetermined message, such as SMS or MMS if the communication network 130 is a mobile communication network. Alternatively, the request may be transmitted over a data channel established between the computing device 120 and the network node 140 by utilizing resources provided by the communication network 130. Naturally, the computing device 120 and the network node 140 are configured so that they are capable of implementing necessary communication interfaces and have necessary applications to be used in the communication. For example, the computing device 120 may comprise an application which the user initiates when the user is willing to request the generation of the augmented reality. The application may also be involved throughout the provision of the augmented reality, i.e. the user initiates a session for requesting and receiving the augmented reality data, as will be described.

In response to the receipt of the request 210 for the generation of augmented reality the network node is configured 140 to initiate a procedure to generate the augmented reality. In the procedure the network node 140 is configured to determine 220 information on a configuration of the space 110 for which the generation of the augmented reality is requested. The determination of information on the configuration may be based on information received in the request 210, such as the identifier of the space 110 in question or location of the space 110. For example, if the request comprises an identifier of the space, such as an elevator car identifier, the network node 140 may be configured to obtain the piece of information from the request and to initiate an inquiry to data storage 150 storing information on the configuration of the space in question. The information on the configuration of the space may comprise, but is not limited to, technical details of the space in question. For example, the information on the configuration of the space may comprise information on dimensions, e.g. in three dimensional space, of the space as well as information on any detail, such as a position of any element, such as a display or mirror, in the space. Further, the information of the configuration of the space may comprise information, which identifies at least one display residing in the space, its position in the space, and so on. Furthermore, the information may comprise information of at least one marker, which is to be displayed on the at least one display when generating the augmented reality according to the present invention. The information of the at least one marker may comprise information on a type of the marker or its position on the at least one display or both, for example. Alternatively or in addition, the information of the at least one marker may comprise information on position(s) of the at least one marker in the space when displayed. The positions may e.g. be expressed in coordinates. Any other information may also be stored in the data storage 150 with respect to the configuration of the space, such as a network address of the display, or a network address of a controller of the display. The network address may refer to an address in a mobile communication network, such as MSISDN, or IP address in data network, for example. Additionally, the configuration information may comprise display 310 specific information within the space 110, such as a position of the display therein. This is especially true in the application area of elevators, wherein a configuration of elevator cars is stored in the data storage. The configuration data of the elevator car may comprise detailed information on the position of the display(s) in the elevator car and/or information on the position of the at least one marker on the display when output.

In response to the determination of information relating to at least one display the network node 140 may be configured to generate a signal 230 to the at least one display residing in the space of which the generation of the augmented reality is requested. The signal is transmitted to the display, or any control device configured to control the display in question, and the signal comprises information for instructing the display to output at least one marker on the display residing in the space. An example of an outcome is schematically illustrated in Figure 3, wherein the space 110, such as an elevator car, is equipped with a display 310 and the display 310 is caused to output at least one marker 320 by the network node. The number of markers to be displayed is not limited to one, but it may also be arranged that a plurality, i.e. more than one, markers 320 are instructed to be output by the display 310. Moreover, the space may comprise a plurality of displays 310 into each of which, or at least into some of them, one or more markers 320 may be output.

In some embodiment of the invention the data storage 150 may be arranged to store information with respect to the marker to be generated for the display(s) in question, such as a position of the marker in the display, a size of the marker, a type of the marker, and so on. These may have relevance due to characteristics of the display 310 in question. When the network node 140 obtains at least some of the mentioned pieces of information from the data storage 150, it may generate 230 a signal comprising instruction to output at least one marker on a display in question. The instruction may also comprise information with respect to the marker, such as a type of the marker, a size of it and so on. In other words, the information may refer to marker data, for example. Alternatively, this kind of parameters may be stored in the display device 310, or the display controller, that in response to a receipt of the signal from the network node 140 may output the marker(s) on the display. All in all, in response to a receipt of the signal from the network node 140, the at least one marker may be output on the display 310 in a position within the space 110 known by the network node 140. According to some embodiment of the invention the network node may also be configured to inform, e.g. by generating a signal and transmitting it, the computing device 120 that the network node 140 has instructed the at least one display to output the at least one marker 320. In case the procedure to generate the augmented reality data is originated and performed over a session established with an application installed in the computing device 120, the informing on the delivered instruction to output the marker(s) may be shown the user over the application. Further, the application may also be configured to provide information messages, such as instructions, to the user in order to guide the user during the generation of the augmented reality data.

Furthermore, the network node 140 may be configured to maintain a session of the generation of the augmented reality data. For example, the network node 140 may be configured to generate a session ID for the process and include the session ID to any communication between the different entities. In this manner the network node 140 may maintain the information in an efficient way.

Now, the at least one marker is output on the at least one display 310 in response to the steps 210, 220 and 230, as described. In order to proceed in the generation of the augmented reality the network node may be configured to generate 240 a signal for the computing device 120 for instructing the computing device 120 to provide augmented reality data for the space according to the configuration of the space and for outputting the augmented reality data with image data captured with a camera of the computing device 120 at least in part on a basis of the at least one marker 320 output on the at least one display 310 residing in the space in order to generate augmented reality of the space. In other words, the instruction may comprise an indication, which specifies augmented reality data to be used when outputting the augmented reality on a display of the computing device 120. For example, the instruction may comprise, but is not limited to, an indication of the color scheme and texture for the space which is to be output in the augmented reality, which may take into account the current configuration of the space in question. Thus, the signal may, in some embodiment of the invention, comprise information of the current configuration of the space, such as dimensions as well as positions of any detail in the space, and instruction for providing content, or even the content itself, for generating the augmented reality data in the computing device for outputting. The configuration information of the space may advantageously comprise information at least on the configuration, which may be visible in the captured image. Moreover, the signal may comprise an instruction relating to the output of the augmented reality data with image data captured with a camera of the computing device 120 at least in part on a basis of the at least one marker 320, which is output on the at least one display 310 residing in the space in response to the step 230. For example, the instruction relating to the output of the provided, i.e. selected or generated for example, augmented reality data may comprise position information of the marker in the current configuration of the space, which is to be utilized in an alignment of the augmented reality data with the captured image data.

In some embodiment of the invention the generation of a signal for outputting augmented reality data 240 may comprise user input data, which may for example indicate the augmented reality data the user is willing to output. For example, in case that the space is an elevator car the user may indicate that he/she wants to receive augmented reality data by means of which the design of the elevator car may be shown with some specific interior. Thus, the user input may also be given with some predetermined user interaction, such as prompting the user to provide at least some indication on the augmented reality data he/she wants to see in the output augmented reality. Advantageously, this kind of user input may be given through at least one I/O device of the computing device e.g. over a specific application executing at least some operations relating to the generation of the augmented reality.

For sake of clarity it is worthwhile to mention that the step 240 may also be generated prior to the generation of the signal for outputting marker(s) 230, which may, in at least some implementation of the invention, be preferred from user experience point of view. Thus, the steps 230 and 240 as described may be performed in any order or at least in part concurrently.

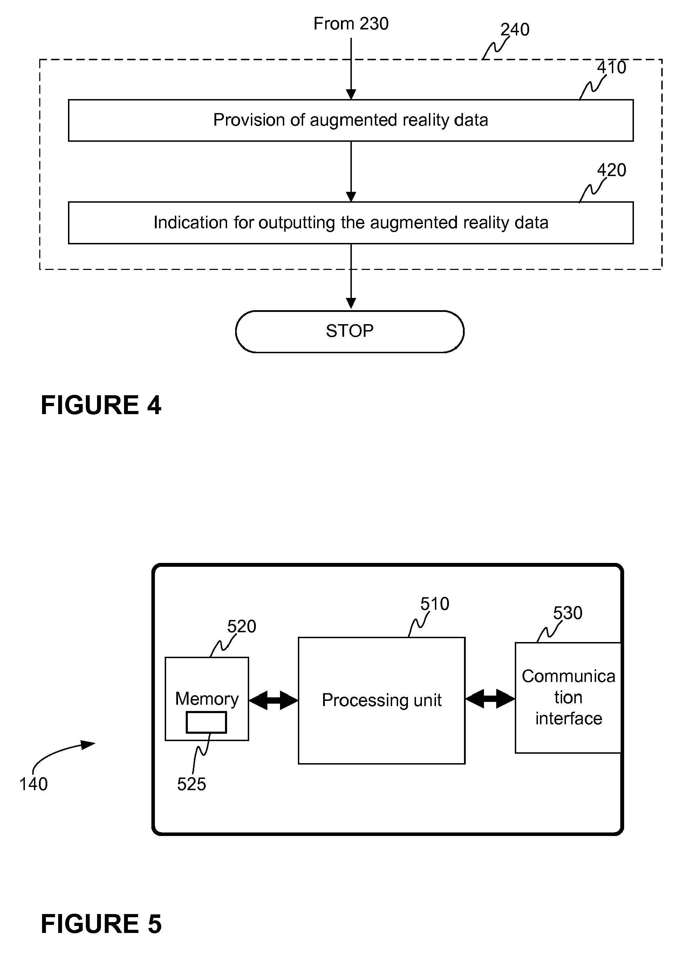

Figure 4 schematically illustrates at least some steps performed in the method step 240. As said, the network node 140 may be configured to generate an instruction for providing the augmented reality data 410 for guiding the computing device 120, or the application running in the computing device 120 if that is the case, to select, or generate, a desired augmented reality data to be output from a data stored in a memory of the computing device 120. The provision may also be performed so that the network node 140 may be configured to obtain, or select, the augmented reality data, or a piece of software code generating the augmented reality data, from data storage and deliver it to the computing device 120. In other words, the necessary pieces of instructions for generating the augmented reality data with processing means, such as a processor, are defined in the instruction. Moreover, in the step 240 it may be generated at least one instruction comprising at least one indication, i.e. piece of information, which enables the computing device 120 to output the augmented reality data with image data captured with a camera of the computing device 120. Herein it is assumed that the user of the computing device 120 has activated a camera application, and thus the camera, in the computing device 120, or it is activated automatically when the generation of the augmented reality is initiated, e.g. in response to a delivery of the request. Alternatively the network node 140 may be configured to instruct the computing device 120 to activate the camera application through the application relating to the generation of the augmented reality. This may be arranged e.g. in response to an execution of any of the preceding steps of the method by the network node 140.

More specifically, the step 420 may e.g. be arranged so that the computing device 120, or the application therein, is configured to identify the at least one marker displayed on the at least one display from the captured image. For example, according to an embodiment of the invention the computing device 120 may be configured to perform an analysis if the at least marker 320 is shown in the image before taking any further steps. The recognition of the at least one marker in the image may be performed with any known mechanism, such as by using an applicable pattern recognition algorithm for the task. If the marker(s) is not found from the captured image (e.g. determined in some pre-analysis performed by the computing device) it may be arranged that the computing device 120 prompts the user to focusing the camera in some other way so that the marker(s) is included in the captured image. The captured image refers here to a real time video image or even a still image captured by the computing device 120.

As mentioned, the output of the augmented reality data may be arranged so that the at least one marker is identified from the captured image and the augmented reality data is adjusted to the captured image at least in part on a basis of the at least one marker. In other words, the at least one instruction received in the computing device 120 from the network node 120 may comprise data which provides the computing device 120, or the relevant application, one or more instructions how to represent, such as overlay, the augmented reality data with the image data captured with the camera. The instructions may be provided e.g. with mutual coordinates, or similar. As a result the augmented reality data may be matched, or aligned, with the captured image data 430 at least partly by means of the marker detected in the image data. As said, the augmented reality data may comprise a data point which is to be aligned with the marker, as a reference point, in the captured image, for example. As mentioned, the network node may also have provided information on a position of the at least one marker in the space in the configuration information, which information may also be utilized in the alignment of the augmented reality data.

The alignment of the augmented reality data with the captured image data in the above described examples is only made on the basis of at least one marker. However, it may also be arranged that the computing device 120 outputting the augmented reality data for the captured image may be configured to perform some further actions for the alignment purpose. These may comprise, but are not limited to, determination of some predefined pattern from the captured image, such as some other space specific characteristic (e.g. shape), which may be utilized for the alignment, and even scaling, together with the marker(s) as well as even for providing the augmented reality data for the space in question. This kind of additional alignment data determination is advantageous especially in implementations where the number of markers shown on the display is limited, such as only one marker is shown.

For sake of clarity it is worthwhile to mention that generation steps 230 and 240, as schematically illustrated in Figure 2, comprise the delivery of the signals, e.g. transmitting, to the corresponding entities as described.

In the previous description of at least some embodiments of the method according to the present invention the generation of the augmented reality is performed by adding the augmented reality data to a real-time image data stream, i.e. video stream, captured with a camera integrated or coupled to the computing device 120. However, the inventive idea according to the present invention is not limited to be applied with video stream only, but the augmented reality may be generated to a still image, which may be captured with the camera integrated or coupled to the computing device 120.

In some embodiment of the invention the network node 140 may be configured to participate to the generation of the augmented reality data more than described above or even to generate the whole augmented reality and transmit it to the computing device 120. For example, the computing device 120 may similarly be configured to transmit the request to the network node 140 as described. The network node 140 may be configured to instruct that the at least one marker is output on the at least one display residing in the space in question. Moreover, the network node 140 may be configured to generate a signal for instructing the computing device 120 to capture an image on the one or more displays on which the marker is output. The computing device 120 may be configured to transmit the captured image to the network node 140. The signal in which the captured image is transmitted may further comprise a session ID, or similar, in order to make the network node 140 to determine the procedure into which the received image relates to, if the network node 140 has assigned such a session ID for the procedure. As a result, the network node 140 may find the procedure with the session ID from, and thus information on the space 110 for the generation of the augmented reality data, as will be described.

Next in the described embodiment of the invention, the network node 140 may be configured to perform an analysis of the received image in a similar manner to the embodiment in which the computing device 120 performs at least some steps of the generation of the augmented reality. During the analysis the network node 140 may be configured to recognize if one or more marker(s) is shown in the image. The recognition of the at least one marker from the received image may be performed with any known mechanism, such as by using an applicable pattern recognition algorithm for the task. In response to recognition of the one or more markers from the received image the network node 140 may be configured to generate a signal 250 to the computing device 120, which causes an output an augmented reality data overlaid to the captured image on the display of the computing device 120. The signal comprises information on a position of the marker within the captured image and the marker is used for aligning the augmented reality data on top of the captured image. More precisely, at least one point is defined in the augmented reality data which point is to be aligned with the marker data in order to position the augmented reality data being image data in an optimal way to the captured image. Finally, the generated signal comprising instructions of the final image, i.e. the augmented reality data overlaid on the captured image, is output on the display of the computing device 260.

In the example as described above the computing device 120 is configured to transmit the captured image to the network node 140. According to some other embodiment of the invention the computing device 120 may be configured so that when the image is captured, it may be configured to inform the network node that the image is captured and augmented reality data is requested. For example, the computing device 120 may be configured to provide a pre-agreed indicator possibly e.g. with another indicator defining the elevator car in question to the network node 140 and request the augmented reality data. Prior the provision the computing device 120 may perform at least some portions of the analysis 240 as described above. When the augmented reality data is received in the computing device 120, the computing device may perform necessary operations to generate the signal to output the augmented reality data with the captured image data as described.

As described above the augmented reality data may be stored in a network side or in a memory of the computing device 120 depending on an implementation of the present invention. The storage in the network side may be arranged so that the augmented reality data is stored in data storage accessible by the network node 140, which may be, but is not limited to, the same data storage 150 as referred earlier in the description. Hence, the provision of augmented reality data shall be understood at least to cover that the computing device or the network node selects or generates the augmented reality data either alone or together e.g. with each other through a communication.

Some aspects of the present invention relate to a network node 140 as illustrated schematically in Figure 5. The further network node 140 comprises a processing unit 510 including one or more processors 510, one or more memories 520 and one or more communication interfaces 530 which entities may be communicatively coupled to each other with e.g. a data bus. The communication interface 530 may comprise necessary hardware for communication in wired or wireless manner with the computing devices, data storage or any other entity or entities. The communication interface 530 may be at least partly controlled by the one or more processors 510 e.g. by executing portions of computer program code 525 stored in the one or more memories 520. Moreover, the computer program code 525 may define instructions that cause the network node 140 to operate as described when at least one portion of the computer program code 525 is executed by the processing unit 510. The network node 140 may e.g. be a server communicatively coupled to one or more communication networks and in this manner to couple the network node 140 to external entities.

As said the network node 140 may refer to a server configured to implement the operations as described. Alternatively, the network node 140 may be implemented in a distributed manner e.g. so that a plurality of nodes are configured to perform one or more of the tasks relating to the implementation of the method according to the invention.

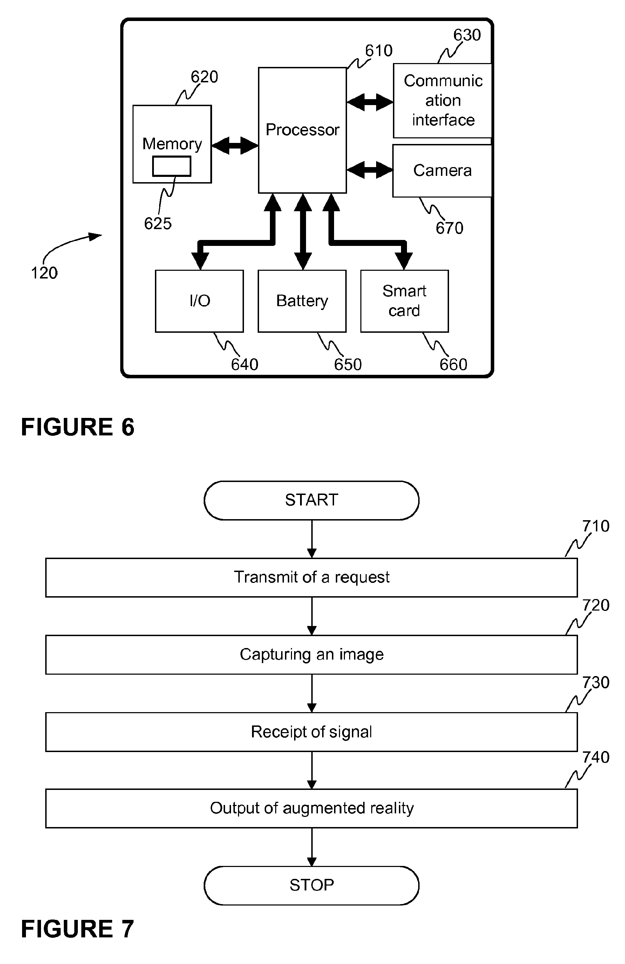

Figure 6 illustrates schematically, as a block diagram, some components of a computing device 120 being involved in the operation according to the present invention. The computing device 120 may comprise further components or portions in addition to those shown in Figure 6. The computing device 120 may comprise a processor 610 and a memory 620 for storing data and computer program code 625. The computing device 120 may further comprise user I/O (input/output) components 640 that may be arranged, possibly together with the processor 610 and at least a portion of the computer program code 625, to provide a user interface (UI) for receiving input from a user of the computing device 120 and/or providing output to the user of the computing device 120. The user I/O components 640 may comprise hardware components such as a display, a touchscreen, a touchpad, a mouse, a keyboard, and/or an arrangement of one or more keys or buttons, etc. Further, the communication device 120 may comprise a communication interface 630 for communicating either directly or indirectly, such as over a communication network, with the network node 140 as described. The memory 620 and a portion of the computer program code 625 stored therein may be further arranged to, with the processor 610, to provide a control portion or a control function for controlling operation of communication interface. These control functions may be, separately or jointly, referred to as control means. The computing device 120 may also comprise a battery 650 for providing energy for the operation of the device as described. Furthermore, the computing device 120 may be equipped with a smart card 660, such as a subscriber identity module comprising necessary data and functions to be utilized in accessing to a communication network into which the smart card data and/or functions are needed. The computing device 120 as schematically illustrated in Figure 6 comprises a camera device 670 by means of which it is possible to capture still images or video image for the purpose of the present invention. As mentioned earlier the camera is not necessarily integrated to the computing device 120, but may be separate device being at least communicatively coupled to the computing device 160.

For sake of clarity although at least some of the components in the computing device are illustrated as single components, any of the components may, however, be implemented as respective one or more separate components, some or all of which may be integrated/removable. Hence, the number of physical and operational components within each block may vary from the illustration.

Some non-limiting examples of the computing device 120 may e.g. be a mobile phone, a tablet computer or a laptop computer.

Figure 7 schematically illustrates a method for generating augmented reality of a space to be output on a display of a computing device 120 from the computing device 120 point of view. In the method a user of the computing device 120 may perform actions, which causes the computing device to transmit 710 a request for a generation of the augmented reality of the space to a network node 140. This may also be configured to happen automatically. Next, an image of at least part of the space may be captured 720 with a camera coupled to the computing device 120. The image data shall comprise image data of at least one display residing in the space, wherein at least one marker is output on the display when the image is captured. In step 730, a signal comprising at least one instruction for providing augmented reality data for the space according to a configuration of the space is received in the computing device 120. The instruction may comprise information related to the configuration of the space, such as elevator car, which e.g. limits alternatives of the augmented reality data to be output in the computing device 120. The signal may also comprise an instruction for outputting 740 the augmented reality data with image data captured with the camera at least in part on a basis of at least one marker 320 output on at least one display 310 residing in the space recognized from the captured image by the computing device 120 in order to generate augmented reality of the space.

In the method of Figure 7, the output of the augmented reality data with the image data captured with the camera at least in part on a basis of at least one marker 320 may be performed by overlaying the augmented reality data on top of the captured image data by the computing device 120. For example, the augmented reality data may be aligned with the image data on the basis of the marker recognized from the image data. In such an implementation the augmented reality data comprises at least one reference point which is to be aligned with the at least one marker. Naturally, in case the augmented reality data is not any ready-made data the at least one marker in the captured image may provide a reference point for any augmented reality content to be added in the captured image, being either still image or video image, when the augmented reality is generated.

In the description above it is described a solution by means of which it is possible to generate augmented reality of a space. The augmented reality refers in this context to a generation of data to be output to the user, such as image data, in which stored augmented reality data is combined with a real world data, such as a captured image or video. The solution according to the present invention introduces a light way to generate augmented reality since any heavy computation e.g. in a form of pattern recognition is minimized.

The solution according to the present invention when applied in the context of elevator systems enables provision of new type of services. For example, by implementing the solution according to the invention a client may see different design options, such as interior design, for the elevator type in question. This is especially advantageous in the area of elevator solutions, because there exists very accurate data basis for elevator configurations and due to this it is possible to obtain information on a location of a display in an easy way and to generate the at least one marker to the display(s) very accurately. The solution according to the present invention may also be combined to an eCommerce solution in which the user may finally make an order of the design that satisfies the user in the augmented reality environment.

All in all, the solution may be considered to be established with a system into which belong at least one network node 140 and at least one computing device 120. The mentioned entities may be configured to execute computer program code, e.g. in a form of an application, which causes the entities to operate as described and, thus, establish as system in which the augmented reality of the space may be generated.

In the description of the present invention above it is indicated that the augmented reality data is mainly visual data, such as any effects, to be overlaid on the captured image data. Alternatively or in addition, the same inventive idea may be utilized in a context of sound environment of the space in question. The generation of augmented reality may comprise enhancing the sound environment by modifying the soundscape in some manner. For example, the soundscape may be modified, i.e. enhanced, in response to a detection of the position of the computing device with respect to the space. Any other effect may also be used in the same manner in order to provide the augmented reality for the space.

The specific examples provided in the description given above should not be construed as limiting the applicability and/or the interpretation of the appended claims. Lists and groups of examples provided in the description given above are not exhaustive unless otherwise explicitly stated.

## Claims

1. A method for generating augmented reality of a space to be output on a display of a computing device (120), the method comprises:
receiving a request (210) for a generation of the augmented reality of the space from the computing device (120),
determining (220) information on a configuration of the space (110) on which the generation of the augmented reality is requested,
generating (230) a signal to at least one display (310) residing in the space for outputting at least one marker (320) on the at least one display (310) according to the information on the configuration of the space,
generating (240) a signal comprising at least one instruction to the computing device (120) for providing augmented reality data for the space according to the configuration of the space and for outputting the augmented reality data with image data captured with a camera of the computing device (120) at least in part on a basis of the at least one marker (320) output on the at least one display (310) residing in the space in order to generate augmented reality of the space.

2. The method of the claim 1, wherein the determination of configuration information of the space comprises a step of inquiring information on the at least one display (310) from data storage.

3. The method of the claim 2, wherein the information on the at least one display (310) comprises information on at least one of the following: a network address of the at least one display (310), a network address of a controller of the at least one display (310), a position of the at least one display (310) in the space, a position of the at least one marker to be output on the at least one display (310).

4. The method of any of the preceding claims, wherein the signal comprising at least one instruction to the computing device (120) for providing augmented reality data for the space according to the configuration of the space and for outputting the selected augmented reality data with image data captured with a camera of the computing device (120) at least in part on a basis of the at least one marker (320) output on the at least one display (310) residing in the space comprises configuration information of the space (110).

5. The method of claim 4, wherein the configuration information of the space (110) in the signal comprises at least one of the following: dimensions of the space (110), information on a position of the at least one marker (320) in the space when displayed.

6. A network node (140) for generating augmented reality of a space to be output on a display of a computing device (120), the network node (140) comprising
at least one processor (510)
and at least one memory (520) including computer program code (525)
the at least one memory (520) and the computer program code configured to, with the at least one processor (510), cause the network node (140) at least to perform:
receive a request (210) for a generation of the augmented reality of the space from the computing device (120),
determine (220) information on a configuration of the space (110) on which the generation of the augmented reality is requested,
generate (230) a signal to at least one display (310) residing in the space for outputting at least one marker (320) on the at least one display (310) according to the information on the configuration of the space,
generate (240) a signal comprising at least one instruction to the computing device (120) for providing augmented reality data for the space according to the configuration of the space and for outputting the augmented reality data with image data captured with a camera of the computing device (120) at least in part on a basis of the at least one marker (320) output on the at least one display (310) residing in the space in order to generate augmented reality of the space.

7. The network node (140) of the claim 6, wherein the network node (140) is further caused to inquire configuration information on the at least one display (310) relating to the space from data storage.

8. The network node (140) of the claim 7, wherein the inquired configuration information on the at least one display (310) comprises information on at least one of the following: at least a network address of the at least one display (310), a network address of a controller of the at least one display (310), a position of the at least one display (310) in the space, a position of the at least one marker to be output on the at least one display (310).

9. The network node (140) of any of the preceding claims 6-8, wherein the network node (140) is caused to provide configuration information of the space (110) in the signal comprising at least one instruction to the computing device (120) for providing augmented reality data for the space according to the configuration of the space and for outputting the selected augmented reality data with image data captured with a camera of the computing device (120) at least in part on a basis of the at least one marker (320) output on the at least one display (310) residing in the space.

10. The network node (140) of the claim 9, wherein the configuration information of the space (110) in the signal comprises at least one of the following: dimensions of the space (110), information on a position of the at least one marker (320) in the space when displayed.

11. A method for generating augmented reality of a space to be output on a display of a computing device (120), the method comprises:
transmitting (710) a request for a generation of the augmented reality of the space to a network node (140),
capturing (720) an image of at least part of the space (110) with a camera coupled to the computing device (120),
receiving (730) a signal comprising at least one instruction for providing augmented reality data for the space according to a configuration of the space, and
outputting (740) the augmented reality data with image data captured with the camera at least in part on a basis of at least one marker (320) output on at least one display (310) residing in the space recognized from the captured image by the computing device (120) in order to generate augmented reality of the space.

12. The method of the claim 11, wherein the output of the augmented reality data with the image data captured with the camera at least on a basis of at least one marker (320) is performed by overlaying the augmented reality data on top of the captured image data.

13. The method of any of the claims 11 or 12, wherein the augmented reality data is aligned with the image data on the basis of the at least one marker recognized from the image data.

14. A computing device (120) for generating augmented reality on a display of the computing device (120), the computing device (120) comprising
at least one processor (610)
and at least one memory (620) including computer program code (625)
the at least one memory (620) and the computer program code configured to, with the at least one processor (610), cause the computing device (120) at least to perform:
transmit a request for a generation of augmented reality of a space to a network node (140),
capture an image of at least part of the space (110) with a camera coupled to the computing device (120),
receive a signal comprising at least one instruction for providing augmented reality data for the space according to a configuration of the space, and
output the augmented reality data with image data captured with the camera at least in part on a basis of at least one marker (320) output on at least one display (310) residing in the space recognized from the captured image by the computing device (120) in order to generate augmented reality of the space.

15. The computing device (120) of the claim 14, wherein the computing device (120) is configured to output the augmented reality data with the image data captured with the camera at least on a basis of at least one marker (320) by overlaying the augmented reality data on top of the captured image data.

16. The computing device (120) of any of the claims 14 or 15, wherein the computing device is configured to align the augmented reality data with the image data on the basis of the at least one marker recognized from the image data.
